# EUROPEAN PATENT SPECIFICATION

(11) **EP 0 757 650 B1**
(45) Date of publication and mention of the grant of the patent: **04.08.1999**
(21) Application number: 94905500.8
(22) Date of filing: 21.12.1993
(51) Int. Cl.: B65D 5/56, B31B 1/60

(54) **CARTON BLANK AND MACHINE FOR FORMING THE CARTON BLANKS**
KARTONZUSCHNITT UND MASCHINE ZUR HERSTELLUNG VON KARTONZUSCHNITTEN
EBAUCHE DE BOITE EN CARTON ET MACHINE POUR FACONNER DES EBAUCHES DE BOITES EN CARTON

(30) Priority: 21.12.1992 US 994132; 22.04.1993 US 51628
(43) Date of publication of application: 12.02.1997
(73) Proprietor: GRAPHIC PACKAGING CORPORATION, Paoli Pennsylvania 19301 (US)
(72) Inventor: WALSH, Joseph, Christopher, Longmont, CO 80501 (US); CONATSER, Robert, L., Longmont, CO 80501 (US)
(74) Representative: Baillie, Iain Cameron
(86) International application number: US9312526
(87) International publication number: WO9414664

(56) References cited:
- US-A- 2 305 371
- US-A- 3 198 416
- US-A- 4 139 119
- US-A- 4 254 173
- US-A- 4 526 314
- US-A- 4 720 015

## Description

This invention is directed generally to cartons and methods for forming the cartons from carton blanks and more particularly to a leakproof carton and a method for forming it from a carton blank.

There are many supposedly leakproof cartons on the market today. These are formed using a variety of methods. Some of the cartons are designed to hold granular materials while others are designed to hold liquid materials. While some of these leakproof cartons have been successful, there is always a need for improvement.

This invention provides a leakproof carton formed from a carton blank on which two relatively small sheets of a relatively flexible material are secured with one portion of each sheet secured to portions of the carton blank to form a leakproof seal and other portions of each sheet forming a leakproof bottom closure and a leakproof top closure.

The prior art US-A4,139,119 discloses a paperboard carton with an upper and lower continuous thermoplastic liner adhesively connected in spaced relation to the walls of the carton to form with the walls, a pouch for the contents of the carton.

According to the present invention there is provided a carton blank including a first layer of a unitary sheet of a relatively rigid material having an inner surface and an outer surface, said unitary sheet of a relatively rigid material having a left side edge, a right side edge, a top edge and a bottom edge, said unitary sheet of a relatively rigid material having a plurality of cut and fold lines for dividing said unitary sheet of a relatively rigid material into a plurality of sidewall panel portions, a glue tab panel portion, and top and bottom panel portions extending outwardly from said sidewall panel portions, each of said plurality of sidewall panel portions, said glue tab panel portion and said top and bottom panel portions having an inner surface, a first sheet of a relatively flexible material having an inner surface and an outer surface which outer surface is superposed over said inner surface of said top panel portions and portions of said sidewall panel portions adjacent to said fold lines between said sidewall panel portions and said top panel portions and a portion of said inner surface of said glue tab panel portion, a second sheet of a relatively flexible material having an inner surface and an outer surface which outer surface is superposed over said inner surface of said bottom panel portions, and other portions of said sidewall panel portions adjacent to said fold lines between said sidewall panel portions and said bottom panel portions and another portion of said inner surface of said glue tab panel portion, characterized in that said carton blank includes a second layer ofa plastics material having edge portions with portions of said edge portions coinciding with said left, right, top and bottom edges and superposed over and secured to at least portions of said inner surfaces of said first and second sheets of relatively flexible material and the portions of said inner surfaces of said plurality of sidewall panel portions and said glue tab panel portion between said first and second sheets of a relatively flexible material.

According to a further aspect of the present invention, there is provided an apparatus for carton blanks and including a pair of rolls (122, 124) having facing portions spaced a predetermined distance apart to form a nip therebetween, first feeding apparatus for feeding a continuous web of a relatively rigid material into said nip, second feeding apparatus for feeding a plurality of continuous strips of a relatively flexible material in spaced apart relationship and superposed over portions of said continuous web of relatively rigid material into said nip, cutting apparatus for cutting said secured together continuous web of a relatively rigid material having cut lines and fold lines and said plurality of continuous strips of a relatively flexible material into individual said carton blanks, and cutting and creasing apparatus for forming said cut lines and fold lines in said carton blanks, characterized in that said apparatus includes coating apparatus for applying an adhesive coating material over exposed surfaces of said plurality of continuous strips of a relatively flexible material and said web of a relatively rigid material as they pass through said nip, and third feeding apparatus for feeding a continuous film of a relatively flexible plastics material having opposite surfaces into said nip so that one of said opposite surfaces is in contact with said coating of adhesive material to secure said continuous film of a relatively flexible plastics material to said coated surfaces of said spaced apart continuous strips of relatively flexible material and said coated surface of said continuous web of relatively rigid material said continuous film being secured together with said continuous web and continuous strips and received together by said cutting apparatus and said cutting and creasing apparatus.

In one embodiment the first and second sheets of relatively flexible material and at least the exposed portions of the inner surface are fluid impervious. The first and second sheets of relatively flexible material have surfaces formed from a plastics material. In one embodiment the plurality of sidewall panel portions comprise a back panel portion, a right side panel portion, a front panel portion and a left side panel portions and the glue tab panel portion extends outwardly form one of the left side and right side panel portions.

A carton is formed from the above described carton blank by folding the sidewall panel portions and the glue tab panel portion around the fold lines therebetween securing the glue tab panel portion to one of the sidewall panel portions sealing together the facing surface of the second sheet of relatively flexible material folding the bottom panel portions into superposed relationship and securing them together filling the carton with a desired material sealing facing together the surfaces of the first sheet of relatively flexible material and folding the top panel portions into superposed relationship and securing them together to form a leakproof carton. In one embodiment the plurality of sidewall panel portions comprise a back panel portion, a right side panel portion, a front panel portion and a left side panel portion, and the glue tab panel portion is secured to one of said front and back panel portions. The method further comprises securing the portions of said first and second sheets of relatively flexible material extending downwardly and upwardly from said glue tab panel portion to portions of the first and second sheets of relatively flexible material extending downwardly and upwardly from said one of said front and back panel portions.

In another embodiment, the carton blank is the same as that described above except for the location of the first and second sheets of a relatively flexible material. The first sheet of a relatively flexible material has an upper edge, a central body portion and a lower edge; and the first securing means secure portions of the central body portion adjacent to the upper edge to the portions of the sidewall panel portions and the portion of the glue tab panel portion. The second sheet of a relatively flexible material has an upper edge, a central body portion and a lower edge and the second securing means secure portions of the central body portion adjacent to the lower edge to the other portions of the sidewall panel portions and the other portion of the glue tab panel portion. The method of forming a carton from the another preferred carton blank comprises folding the remaining portion of the central body portion of the first sheet of relatively flexible material over the first securing means until the remaining portion is in superposed relationship over the first securing means, the top panel portions and the portion of the glue tab portion folding the remaining portion of the second sheet of relatively flexible material over the second securing means portion thereof until the remaining portion is in superposed relationship over the second securing means, the bottom panel portions and the another portion of the glue tab panel portion folding the sidewall panel portions and the glue tab panel portion around the fold lines therebetween securing the glue tab panel portion to one of the sidewall panel portions sealing together the lowermost portion of the facing surfaces of the second sheet of relatively flexible material folding said bottom panel portions into superposed relationship and securing them together filling the carton with a desired material sealing together the uppermost portions of the facing surface of the first sheet of relatively flexible material and folding the top panel portions into superposed relationship and securing them together to form a leakproof carton.

In another embodiment the carton blank is the same as that described above except for the location of the first and second sheets of a relatively flexible material. The first sheet of a relatively flexible material has an upper edge, a central body portion and a lower edge; and the first securing means secure portions of the central body portion adjacent to the upper edge to the portions of the sidewall panel portions and the portion of the glue tab panel portion. The second sheet of a relatively flexible material has an upper edge, a central body portion and a lower edge and the second securing means secure portions of the central body portion adjacent to the lower edge to the other portions of the sidewall panel portions and the other portion of the glue tab panel portion and glue tab panel portion is secured to one of said front and back panel portions. The method further comprises securing the portions of the first and second sheets of relatively flexible material extending downwardly and upwardly from the glue tab portion to portions of the first and second sheets of a relatively flexible material extending downwardly and upwardly from the one of the front and back panel portions.

In another embodiment the carton blank comprises a unitary sheet of a relatively rigid material, such as paperboard, having an inner surface and an outer surface and a left side edge, a right side edge, a top edge and a bottom edge with the left and right side edges being perpendicular to the top and bottom edges. The unitary sheet of relatively rigid material has a plurality of cut and fold lines for dividing the unitary sheet of relatively rigid material into a plurality of sidewall panel portions, a glue tab panel portion, and top and bottom panel portions extending outwardly from the sidewall panel portions. A first strip, such as paper, of a relatively flexible material having an inner surface and an outer surface is superposed over the inner surface of the top panel portions and portions of the sidewall panel portions adjacent to but spaced from the fold lines between them and the top panel portions and a portion of the inner surface of said glue tab panel portion. A second strip, such as paper, of a relatively flexible material having an inner surface and an outer surface is superposed over the inner surface of the bottom panel portions, and other portions of the sidewall panel portions adjacent to the fold lines between them and the bottom panel portions and another portion of the inner surface of said glue tab panel portion. A continuous coating of a plastic material, such as polyethylene, covers the inner surfaces of the first and second strips of relatively flexible material and the remaining portions of the inner surfaces of the plurality of sidewall panel portions and the glue tab panel portion and holds the first and second strips of a relatively flexible material in the desired relationship with the unitary sheet of a relatively rigid material. The first strip of a relatively flexible material has an upper edge, a central body portion and a lower edge. If desired, first securing means are used to secure portions of the central body portion adjacent to the lower edge to the portions of the sidewall panel portions adjacent to but spaced from the fold lines between them and the top panel portions the portion of the glue tab panel portion. The second strip of a relatively flexible material has an upper edge, a central body portion and a lower edge. If desired, second securing means are used to secure portions of the central body portion adjacent to the upper edge to the portions of the sidewall portions adjacent to but spaced from the fold lines between them and the bottom panel portions and the another portion of said glue tab panel portion.

In another embodiment, the carton blank comprises a unitary sheet of a relatively rigid material, such as paperboard, having an inner surface and an outer surface and a left side edge, a right side edge, a top edge and a bottom edge with left and right side edges being perpendicular to the top and bottom edges. The unitary sheet of relatively rigid material has a plurality of cut and fold lines for dividing the unitary sheet of a relatively rigid material into a plurality of sidewall panel portions, a glue tab panel portion and top and bottom panel portions extending outwardly from the sidewall panel portions. A sheet of relatively flexible plastic material, such as polypropylene, is superposed over the inner surface of the unitary sheet of relatively rigid material. First securing means extend between the right side edge and the left side edge of the sheet of a relatively rigid material and secure a first portion of the sheet of a relatively flexible plastic material to the portions of the inner surfaces of the sidewall panel portions located between but spaced from the fold lines between them and the top and bottom panel portions and a first portion of the glue tab panel portion. A first sheet of a relatively flexible material, such as paper, is secured to a second portion of the sheet of relatively flexible plastic material and superposed over the top panel portions and the portions of the inner surfaces of the sidewall panel portions between the first portion of the sheet of relatively flexible material and the fold lines between them and said top panel portions and a second portion of said glue tab panel portion. A second sheet of a relatively flexible material, such as paper, is secured to a third portion of the sheet of a relatively flexible plastic material and superposed over the bottom panel portions and the portions of the inner surfaces of the sidewall panel portions between the first portion of the sheet of relatively flexible plastic material and the fold lines between them and the bottom panel portion and a third portion of the glue tab panel portion.

In another embodiment the carton blank comprises a unitary sheet of a relatively rigid material, such as paperboard, having an inner surface and an outer surface and a left side edge, a right side edge, a top edge and a bottom edge. The unitary sheet of a relatively rigid material has a plurality of cut and fold lines for dividing the unitary sheet of a relatively rigid material into at least a plurality of sidewall panel portions, a glue tab panel portion and end panel portions. A unitary sheet of a relatively flexible material is superposed over and secured to the outer surfaces of the at least a plurality of the sidewall panel portions, the end panel portions and only a portion of the glue tab panel portion so that the remaining portion of the outer surface of said glue tab panel portion is exposed. The unitary sheet of a relatively rigid material and the unitary sheet of a relatively flexible material are non-compatible to the use of a water based adhesive. The relatively flexible material can be a plastic material or other material used to form the outer surfaces of the carton. A carton is formed from the carton blank described above by folding the sidewall panel portions around the fold lines securing the end panel portions together; filling said carton; and adhesively securing the exposed outer surface of the glue tab panel portion to a portion of the inner surface of one of the sidewall panel portions using a water based adhesive.

In one embodiment, the apparatus for forming a laminate of materials for use in forming carton blanks comprises a pair of laminating rolls having facing portions spaced a predetermined distance apart to form a nip therebetween. First feeding means are provided for feeding a continuous web of a relatively rigid material, such as paperboard, into the nip. Second feeding means are provided for feeding a plurality of continuous strips of a relatively flexible material, such as paper, in spaced apart superposed relationship over portions of the continuous web of relatively rigid material into the nip. Means are provided for applying a liquid plastic material, such as polyethylene, over exposed surfaces of the plurality of continuous strips of a relatively flexible material and the web of relatively rigid material as they enter the nip and also to form a pool of the liquid plastic material in the nip to ensure an even coating. Third feeding means are provided for feeding a continuous film of a relatively flexible plastic material into the nip so that one of the oppositely facing surfaces is in contact with the liquid plastic material to secure the continuous film of a relatively flexible plastic material to the exposed surfaces of the spaced apart continuous strips of relative flexible material and the exposed surface of the continuous web of relatively rigid material.

Illustrative and presently preferred embodiments of the invention are shown in the accompanying drawings in which:
Fig. 1 is a top plan view of the inside portion of a carton blank of a preferred embodiment of the invention;
Fig. 2 is a perspective view of the carton blank of Fig. 1 slightly enlarged and folded so that desired materials may be placed therein;
Fig. 3 is a perspective view of one closure for a sheet of relatively flexible material;
Fig. 4 is a perspective view of another closure for the sheet of relatively flexible material;
Fig. 5 is a top plan view of a carton blank of another preferred embodiment of the invention;
Fig. 6 is a top plan view of the carton blank of Fig. 5 after initial operations have been performed thereon;
Fig. 7 is a schematic illustration of a laminating process;
Fig. 8 is a top plan view of a portion of a preferred laminate being formed;
Fig. 9 is a cross-sectional view taken on the line 9-9 of Fig. 8;
Fig. 10 is a top plan view of a carton blank formed from the laminate of Fig. 8 as it moves through the formation of the cut and fold lines;
Fig. 11 is a cross-sectional view taken on the line 11-11 of Fig. 10;
Fig. 12 is a top plan view of a portion of another preferred laminate being formed;
Fig. 13 is a cross-sectional view taken on the line 13-13 of Fig. 12;
Fig. 14 is a top plan view of a carton blank formed from the laminate of Fig. 12 as it moves through the formation of the cut and fold lines;
Fig. 15 is a cross-sectional view taken on the line 15-15 of Fig. 14;

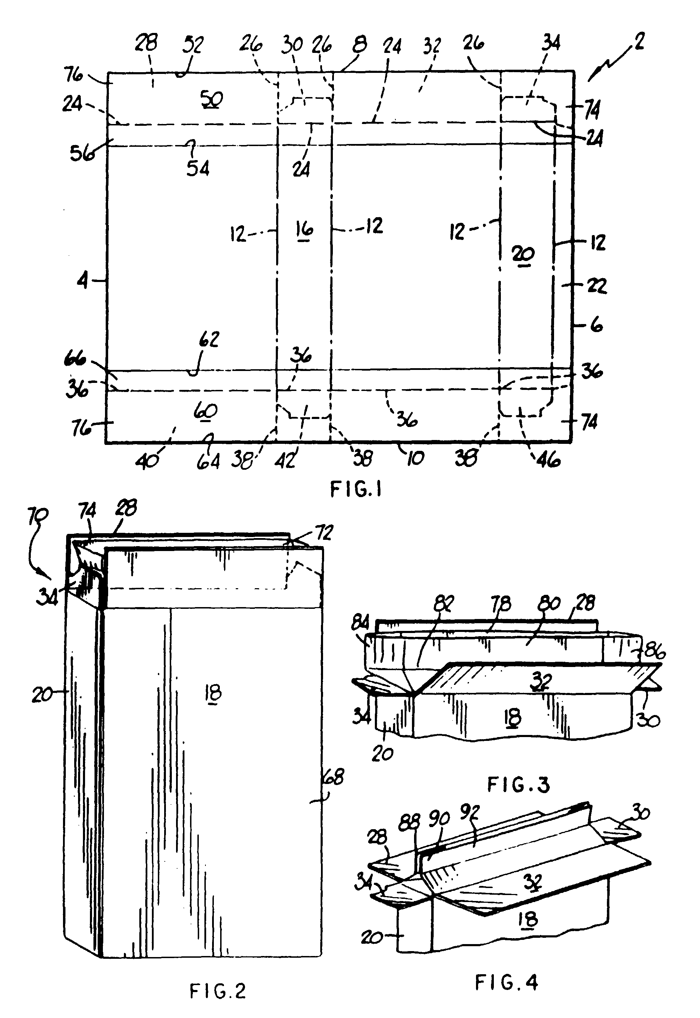

In Fig. 1, there is illustrated the inner surface of a carton blank 2 of one preferred embodiment of the invention. The carton blank 2 has a left side edge 4, a right side edge 6, a top edge 8 and a bottom edge 10 with the left side and right side edges 4 and 6 being perpendicular to the top and bottom edges 8 and 10. A plurality of fold lines 12 divide the carton blank 2 into a back panel portion 14, a right side panel portion 16, a front panel portion 18, a left side panel portion 20 and a glue tab panel portion 22. A plurality of fold lines 24 and a plurality of cut lines 26 divide carton blank 2 into a top back panel portion 28, top right side panel portion 30, top front panel portion 32, and top left side panel portion 34. A plurality of fold lines 36 and cut lines 38 divide the carton blank 2 into bottom back panel portion 40, bottom right side panel portion 42, bottom front panel portion 44 and bottom left side panel portion 46. It is understood that the carton blank illustrated in Figs. 1, 5 and 6 is for illustration purposes only and that this invention can be used with carton blanks of a variety of configurations.

A first sheet 50 of a relatively flexible material having an upper edge 52 and a lower edge 54 overlies the top back 28, top right side 30, top front 32 and top left side 34 panel portions and portions of the back 14, right side 16, front 18, left side 20 and glue tab 22 panel portions. The portion 56 of the first sheet 50 of a relatively flexible material between the fold lines 24 and the lower edge 54 is secured to the underlying portions of the back 14, right side 16, front 18, left side 20 and glue tab 22 panel portions so as to form a continuous seal extending from the left side edge 4 to the right side edge 6.

A second sheet 60 of a relatively flexible material having an upper edge 62 and a lower edge 64 overlies the bottom back 40, bottom right side 42, bottom front 44 and bottom left side 46 panel portions and portions of the back 14, right side 16, front 18, left side 20 and glue tab 22 panel portions. The portion 66 of the second sheet of a relatively flexible material between the fold lines 36 and the upper edge 62 is secured to the underlying portions of the back 14, right side 16, front 18, left side 20 and glue tab 22 panel portions so as to form a continuous seal extending from the left side edge 4 to the right side edge 6.

The first 50 and second 60 sheets of a relatively flexible material are preferably formed from a paper material coated with a plastic material such as polyethylene such as that marketed by Eastman Kodak^{[TM]} under the trade designation 808 P having a thickness between about 1,9 x 10⁻⁵ and 2.54 x 10⁻⁵ meters (0,75 and 1.0 mils) or other types of material having similar characteristics. The portions 56 and 66 are secured using adhesive or welding or other conventional sealing practices. The carton blank preferably comprises a unitary sheet of a composite laminate of layers of materials. The inside layer 9 preferably comprises a paperboard material such as 5,34 x 10⁻⁴ meters (0.21 inch) (recycled) or other similar materials such as natural Kraft board. The outside layer comprises 1.9 x 10⁻⁵ meters (0,75 mil) polypropylene or other similar materials such as low density polyethylene which may be back printed to provide a desired appearance. Other thicknesses of the paperboard and plastic materials may be used. The method of forming the unitary sheet for forming the carton blank 2 is described in U.S. Patent No. 4,254,173 to Peer, Jr., which is hereby incorporated herein by reference thereto. If the carton is to be used for holding liquids the inside surface is coated with a suitable material such a polyethylene or other materials having similar characteristics. Also, a portion of the glue tab panel portion 22 is skived and hemmed in a conventional manner with polyethylene layer being folded over the exposed edge of the paperboard material. In Fig. 2, there is illustrated the outer surface 68 of a partially formed carton 70 from the carton blank 2 and has an open top end 72 so that it is ready for filling. the carton 70 is formed by folding the glue tab panel portion 22 around a fold line 12, then the left side panel portion 20 is folded around a fold line 12, the front panel portion is folded around a fold line 12, and then the right side panel portion 16 is folded around a fold line 12 until the glue tab panel portion 22 overlies a portion of the back panel portion 14. The glue tab panel portion 22 is then secured to the portion of the back panel portion 14 using any conventional sealing practice. At the same time, the portions 74 of the first 50 and second 60 sheets of relatively flexible material are secured to the portions 76 of the top back panel portion 28 and the bottom back panel portion 40. The second sheet 60 of relatively flexible material is then secured together in a conventional manner as described below. The bottom back panel portion 40 is folded around a fold line 36, the bottom left side 46 and bottom right side 42 panel portions are folded around fold lines 36 so that they are in superposed relationship to portions of the bottom panel portion 40 and the bottom front panel portion 44 is fold around a fold line 36 to a superposed relationship. The bottom panel portions 40, 42, 46 and 44 are then secured together using any conventional sealing practice.

After the carton 70 has been filled, the carton is closed and sealed using conventional practices such as those illustrated in Figs. 3 and 4. In Fig. 3, the portions 78 and 80 are secured together, then folded over the line 82. The end flaps 84 and 86 are then folded over to form a leakproof carton. The top panel portions 28, 30 and 32 and 34 are then folded and secured together in the same manner as that described above in relation to the bottom panel portions 40, 42 44 and 46.

In Fig. 4, a gable joint is used to seal the exposed portions of the first sheet 50 of the relatively flexible material. The portion of the first sheet 50 of a relatively flexible material above the left side panel portion is folded inwardly and secured together to form two end portions 88 and 90. The other end is formed in the same manner. The central portions 92 are secured together and they included the innermost portions of the end portions 88 and 90 to form a leakproof carton.

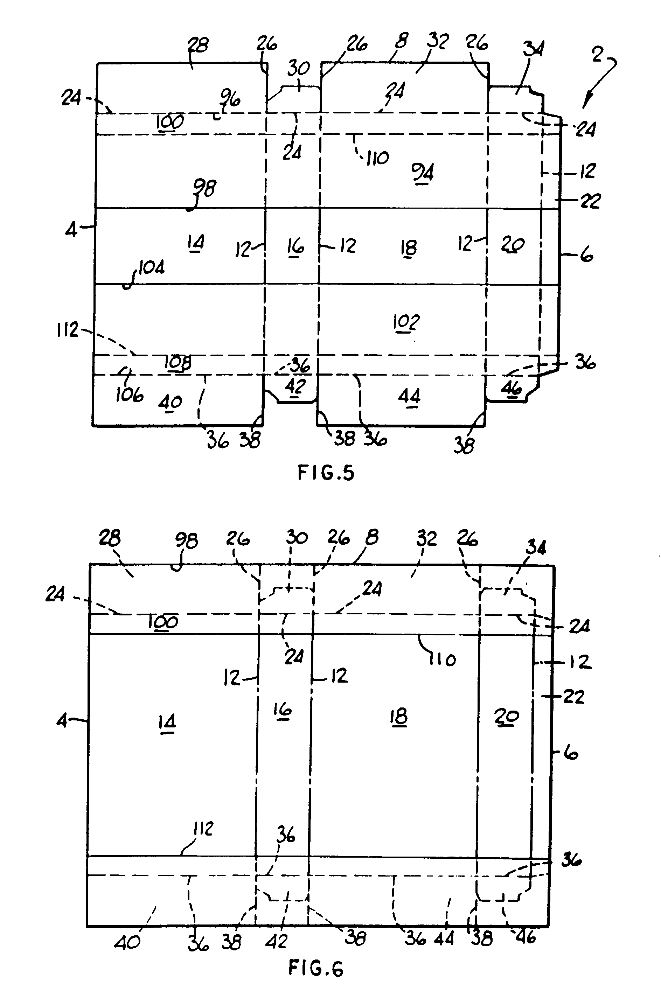

In Figs. 5 and 6, there is illustrated another preferred embodiment of the invention. Since the carton 2 remains the same, it will be identified with the same reference numerals and the description remains the same.

A first sheet 94 of a relatively flexible material having an upper edge 96 and a lower edge 98 overlies portions of the back panel portion 14, right side panel portion 16, front panel portion 18, left side panel portion 20 and glue tab panel portion 22. A section 100 of the first sheet 94 of a relatively flexible material is secure to these panel portions by any conventional practice to form a continuous seal extending between the right side edge 4 to the left side edge 6.

A second sheet 102 of a relatively flexible material having an upper edge 104 and a lower edge 106 overlies other portions of the back panel portion 14, right side panel portion 16, front panel portion 18, left side panel portion 20 and glue tab panel portion 22. A section 108 of the first sheet 94 of a relatively flexible material is secured to these panel portions by any conventional practice to form a continuous seal extending between the right side edge 4 to the left side edge 6.

The first step in forming a carton from the carton blank 2 of Fig. 5 is illustrated in Fig. 6. The lower edge 98 of the first sheet 94 of a relatively flexible material is moved toward the top edge 8 until it is contiguous to the top edge 8 and portions of the first sheet 94 of a relatively flexible material overlie the section 100 and the top back panel portion 28, the top right side panel portion 30, the top front panel portion 32 and the top left side panel portion 34 and is creased along the line 110 to hold it in place. The upper edge 104 of the second sheet 102 of a relatively flexible material is moved toward the bottom edge 10 until it is contiguous to the bottom edge 10 an portions of the second sheet 102 of a relatively flexible material overlie the section 108 and the bottom back panel portion 40, the bottom right side panel portion 42, the bottom front panel portion 44 and the bottom left side panel portion 46 and is creased along the line 112 to hold it in place. A carton 70 is formed, filled and sealed as described above in relation to Figs. 1-4.

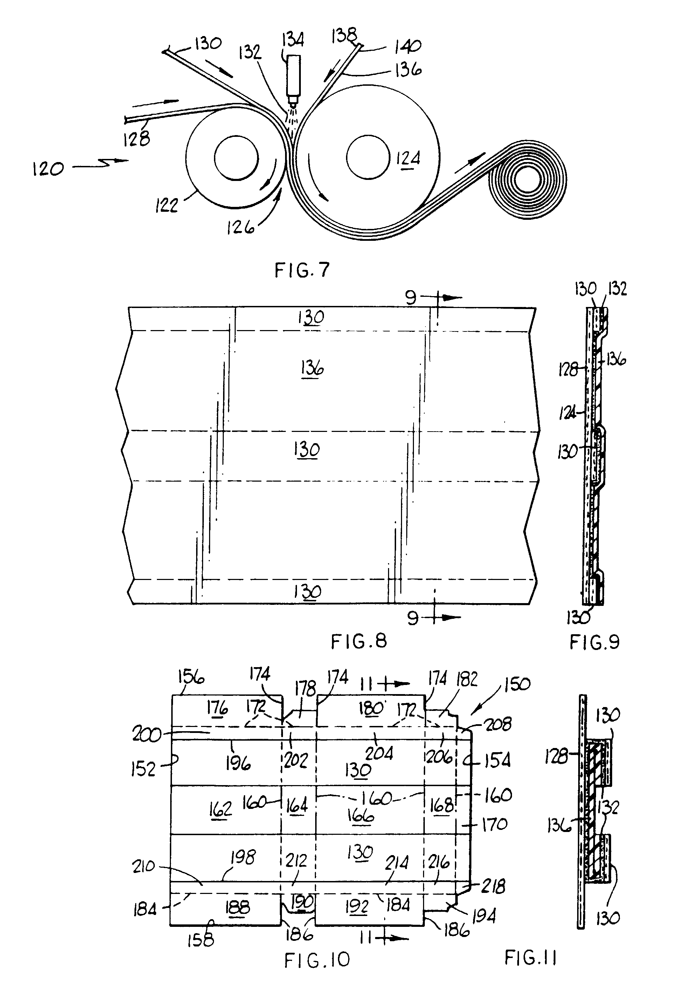

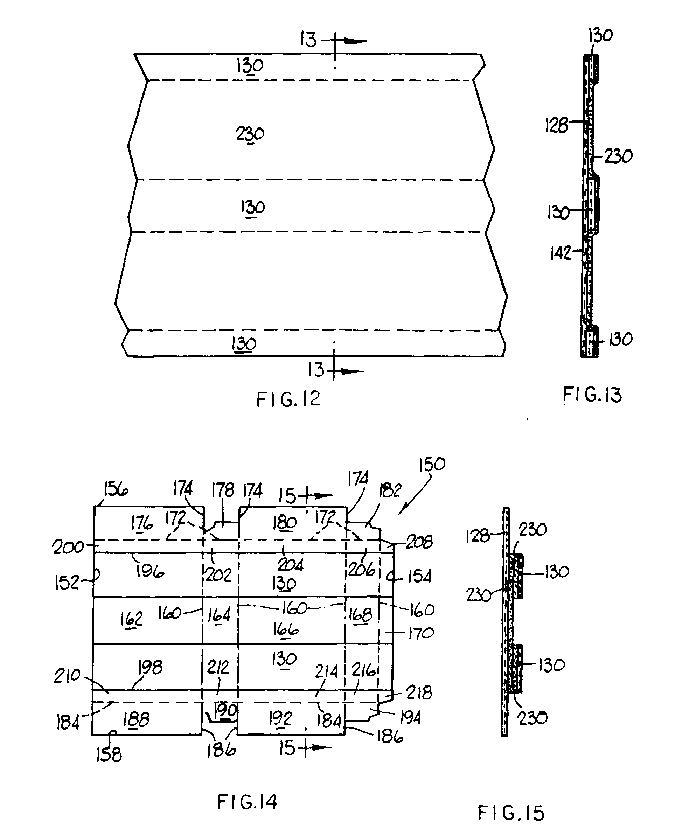

In Fig. 7, there is illustrated conventional laminating apparatus 120 used for forming the laminated products of this invention. The laminating apparatus comprises a pair of rotating rolls 122 and 124 having a nip portion 126. A continuous web 128 of a relatively rigid material, such as a paperboard described in United States Patent No. 4,254,173 dated March 31, 1981 and issued to Peer, Jr. which is incorporated herein by reference thereto is fed into the nip portion 126. At the same time, a plurality of continuous strips 130 of a relatively flexible material, such as a kraft paper, in spaced apart relationship are fed into the nip portion 126 to be in spaced apart superposed relationship on the continuous web 128. A liquid plastic material 132, such as polyethylene or other materials having similar characteristics, is sprayed into the nip portion 126 by a nozzle 134. A continuous film 136 of a relatively flexible plastic material, such as polypropylene or other materials having similar characteristics, having oppositely facing surfaces 138 and 140 is fed into the nip portion 126 so that the surface 138 moves into contact with the liquid plastic material 132. As the laminate passes through the nip portion 126, the surface 138 is secured to the continuous strips 130 of a relatively flexible material and the coated portion of the continuous web 128 of a relatively rigid material. The middle continuous strip 130 has a width twice the width of the end continuous strips 130 so that when forming the carton blanks, described below, the middle continuous strip will be cut in half. The laminate of Figs. 8 and 9 can be passed through further laminating apparatus to apply a conventional outer surface covering on the outer surface 142 of the continuous web 128 such as the reversed printed plastic film in the Peer, Jr. patent. After the formation of the laminate described above, the laminate is cut in half along the middle strip 130. Then, the end continuous strips 130 and the portions of the continuous film 136 of a relatively flexible plastic material are folded back upon themselves, as illustrated in Figs. 10 and 11 and passed through a conventional apparatus for forming cut lines and fold lines to produce a carton blank illustrated in Figs. 10 and 11.

The carton blank 150 has a left side edge 152, a right side edge 154, a top edge 156 and a bottom edge 158 with the left side and right side edges 152 and 154 being perpendicular to the top and bottom edges 156 and 158. A plurality of fold lines 160 divide the carton blank 150 into a back panel portion 162, a left side panel portion 164, a front panel portion 166, a right side panel porion 168 and a glue tab panel portion 170. A plurality of fold lines 172 and a plurality of cut lines 174 divide the carton blank 150 into a top back panel portion 176, top left side panel portion 178, top front panel portion 180, and top right side panel portion 182. A plurality of fold lines 184 and cut lines 186 divide the carton blank 150 into bottom back panel portion 188, bottom left side panel porion 190, bottom front panel portion 192 and bottom right side panel portion 194. It is understood that the carton blank illustrated in Figs. 10 and 11 is for illustration purposed only and that this invention can be used with carton blanks of a variety of configurations.

The upper continuous strip 130 of Fig. 8 is folded over the fold line 196 and the half of the middle continuous strip 130 has been folded over the fold line 198. After the continuous strips 130 together with the portions of the film 136 secured thereto have been folded over, the laminate is passed through a conventional machine to form the cut and fold lines described above. Prior to forming a carton from the carton blank 150, the upper continuous strips 130 is folded back to overlie the top panel portions 176, 178, 180 and 182 and the portions 200, 202, 204 and 206 of the sidewall panel portions 162, 164, 166 and 168 and the portion 208 of the glue panel portion 170 and the lower continuous strip 130 is folded back to overlie the bottom panel portions 188, 190, 192 and 194 and the portions 210, 212, 214 and 216 of the sidewall panel portions 162, 164, 166 and 168 and the portion 218 of the glue panel portion 170. A carton is then formed and filled as described above in relation to Figs. 3 and 4. The inner surface of the carton will be the film 136 of the relatively flexible plastic material to form a leakproof carton.

The laminate illustrated in Figs. 12 and 13 is formed using the apparatus of Fig. 7 but does not include the continuous film 136 of a relatively flexible plastic material. A continuous web 128 of a relatively rigid material, such as paperboard of the type in the Peer, Jr. patent, is fed into the nip 126 along with the plurality of continuous strips 130 of a relatively flexible material, such as paper, and a liquid plastic material, such as polyethylene, is fed into the nip 126 and as these materials pass through the nip 126 a continuous coating 230 of plastic is formed over the exposed surfaces of the continuous web 128 and the continuous strips 130. After the laminate of Figs. 12 and 13 is formed a surface coating or film may be applied to the outer surface 142 of the continuous web 128 as described above. Also, the laminate is cut in half along the middle continuous strip 130 and the continuous strips 130 are folded back as illustrated in Figs. 14 and 15 so that the cut and fold lines may be made. The continuous strips 130 are folded back, as described above, so that the cartons when formed as in Figs. 3 and 4 will have a continuous inner surface of a plastic coating 230. In some instances, it may be desirable to use a bead of adhesive to secure an edge portion of each continuous strip 130 to a portion of the continuous web 128. This can be done when the continuous strips 130 are superposed over portions of the continuous web 128 prior to entering the nip 126.

The thickness of the various materials such as the continuous web 128, the plastic adhesive or coating 132 or 230, the continuous strip 130 and the plastic film have been exaggerated for illustration purposes. The continuous web 128, the plastic adhesive or coating 132 or 230 and the plastic film would be similar to the corresponding materials in the Peer, Jr. patent. The continuous strips 130 may comprise a kraft paper having a thickness of between about 1.9 x 10⁻⁵ and 2,54 x 10⁻⁵ meters (0,75 and 1.0 mils) or other types of materials having similar characteristics.

While illustrative and presently preferred embodiments of the invention have been described in detail herein, it is to be understood that the inventive concepts may be otherwise variously embodied and employed within the scope of the appended claims.

## Claims

1. A carton blank including a first layer of a unitary sheet (128) of a relatively rigid material having an inner surface and an outer surface, said unitary sheet (128) of a relatively rigid material having a left side edge (152), a right side edge (154), a top edge (156) and a bottom edge (158), said unitary sheet (128) of a relatively rigid material having a plurality of cut (174) and fold (160, 172, 184) lines for dividing said unitary sheet (128) of a relatively rigid material into a plurality of sidewall panel portions (162,164, 166, 168), a glue tab panel portion (170), and top and bottom panel portions (176, 178, 180, 182; 188, 190, 192, 194) extending outwardly from said sidewall panel portions (162, 164, 166, 168), each of said plurality of sidewall panel portions (162, 164, 166, 168), said glue tab panel portion (170) and said top and bottom panel portions (176, 178, 180, 182; 188, 190 192, 194) having an inner surface, a first sheet (130) of a relatively flexible material having an inner surface and an outer surface which outer surface is superposed over said inner surface of said top panel portions (176, 178, 180, 182) and portions of said sidewall panel portions (162, 164, 166, 168) adjacent to said fold lines (160, 172) between said sidewall panel portions (162, 164, 166, 168) and said top panel portions (176, 178, 180, 182) and a portion of said inner surface of said glue tab panel portion (170), a second sheet (130) of a relatively flexible material having an inner surface and an outer surface which outer surface is superposed over said inner surface of said bottom panel portions (188, 190, 192, 194), and other portions of said sidewall panel portions (162, 164, 166, 168) adjacent to said fold lines (160, 184) between said sidewall panel portions (162, 164, 166, 168) and said bottom panel portions (188, 190, 192, 194) and another portion of said inner surface of said glue tab panel portion (170), characterized in that said carton blank includes a second layer (136) of a plastics material having edge portions with portions of said edge portions coinciding with said left, right, top and bottom edges (152, 154, 156, 158) and superposed over and secured to at least portions of said inner surfaces of said first and second sheets (130, 130) of relatively flexible material and the portions of said inner surfaces of said plurality of sidewall panel portions (162, 164, 166, 168) and said glue tab panel portion (170) between said first and second sheets (130, 130) of a relatively flexible material.

2. A carton blank according to claim 1, characterized in that the second layer (136) is substantially rectangular and has a surface area greater than the surface area of said first layer (128).

3. A carton blank according to claim 1, characterized in that the second layer (136) includes a sheet of a relatively flexible fluid impervious material.

4. A carton blank according to claim 3, characterized in that the first and second sheets (130, 130) of a relatively flexible material are not secured to said unitary sheet (128) of a relatively rigid material.

5. A carton blank according to any one of claims 1-4, characterized in that the first and second sheets (130, 130) of a relatively flexible material are generally rectangular.

6. A carton blank according to claim 1, characterized in that the second layer (136) includes a cured coating of a plastics material.

7. A carton blank according to claim 6, characterized in that the first and second sheets (130, 130) of a relatively flexible material are not secured to said unitary sheet (128) of a relatively rigid material.

8. A carton blank according to claims 4 or 7, characterized in that the unitary sheet (128) of a relatively rigid material is of paperboard, and the first and second sheets (130, 130) of a relatively flexible material are of paper.

9. Apparatus for forming carton blanks and including a pair of rolls (122, 124) having facing portions spaced a predetermined distance apart to form a nip (126) therebetween, first feeding apparatus for feeding a continuous web (128) of a relatively rigid material into said nip (126), second feeding apparatus for feeding a plurality of continuous strips (130, 130) of a relatively flexible material in spaced apart relationship and superposed over portions of said continuous web (128) of relatively rigid material into said nip (126), cutting apparatus for cutting said secured together continuous web (128) of a relatively rigid material having cut lines (174) and fold lines (160, 172, 184) and said plurality of continuous strips (130, 130) of a relatively flexible material into individual said carton blanks (150), and cutting and creasing apparatus for forming said cut lines (174) and fold lines (160, 172, 184) in said carton blanks (150), characterized in that said apparatus includes coating apparatus for applying an adhesive coating material (132) over exposed surfaces of said plurality of continuous strips (130) of a relatively flexible material and said web (128) of a relatively rigid material as they pass through said nip (126), and third feeding apparatus for feeding a continuous film (136) of a relatively flexible plastics material having opposite surfaces (138, 140) into said nip (126) so that one of said opposite surfaces (138) is in contact with said coating of adhesive material (132) to secure said continuous film (136) of a relatively flexible plastics material to said coated surfaces of said spaced apart continuous strips (130, 130) of relatively flexible material and said coated surface of said continuous web (128) of relatively rigid material, said continuous film (136) being secured together with said continuous web (128) and continuous strips (130, 130) and received together by said cutting apparatus and said cutting and creasing apparatus.

10. Apparatus according to claim 9, characterized in that the adhesive coating material (132) is of a plastics material.

## Patentansprüche

1. Kartonzuschnitt mit einer ersten Lage einer unitären Bahn (128) aus einem verhältnismäßig steifen Material mit einer inneren Oberfläche und einer äußeren Oberfläche, wobei die genannte unitäre Bahn (128) aus einem verhältnismäßig steifen Material eine linke Seitenkante (152), eine rechte Seitenkante (154), eine Oberkante (156) und eine Unterkante (158) aufweist, wobei die genannte unitäre Bahn (128) aus einem verhältnismäßig steifen Material eine Mehrzahl von Schnitt(174) und Falzlinien (160, 172, 184) zur Unterteilung der genannten unitären Bahn (128) aus einem verhältnismäßig steifen Material in eine Mehrzahl von Seitenwandplattenabschnitten (162, 164, 166, 168), einen Klebstoffstreifen-Plattenabschnitt (170) sowie obere und untere Plattenabschnitte (176, 178, 180, 182; 188, 190, 192, 194) aufweist, die sich von den genannten Seitenwandplattenabschnitten (162, 164, 166, 168) nach außen erstrecken, wobei jeder der genannten Mehrzahl von Seitenwandplattenabschnitten (162, 164, 166, 168), der genannte Klebstoffstreifen-Plattenabschnitt (170) sowie die genannten oberen und unteren Plattenabschnitte (176, 178, 180, 182; 188, 190, 192, 194) eine innere Oberfläche aufweist, mit einer ersten Bahn (130) aus einem verhältnismäßig elastischen Material mit einer inneren Oberfläche und einer äußeren Oberfläche, wobei die genannte äußere Oberfläche sich über der genannten inneren Oberfläche der genannten oberen Plattenabschnitte (176, 178, 180, 182) befindet und Teilstücken der genannten Seitenwandplattenabschnitte (162, 164, 166, 168) angrenzend an die genannten Falzlinien (160, 172) zwischen den genannten Seitenwandplattenabschnitten (162, 164, 166, 168) und den genannten oberen Plattenabschnitten (176, 178, 180, 182) und einem Abschnitt der genannten inneren Oberfläche des genannten Klebstoffstreifen-Plattenabschnitt (170), mit einer zweiten Bahn (130) aus einem verhältnismäßig elastischen Material mit einer inneren Oberfläche und einer äußeren Oberfläche, wobei sich die äußere Oberfläche über der genannten inneren Oberfläche der genannten unteren Plattenabschnitte (188, 190, 192, 193) befindet und anderen Teilstücken der genannten Seitenwandplattenabschnitte (162, 164, 166, 168) angrenzend an die genannten Falzlinien (160, 184) zwischen den genannten Seitenwandplattenabschnitten (162, 164, 166, 168) und den genannten unteren Plattenabschnitten (188, 190, 192) und einem anderen Teilstück der genannten inneren Oberfläche des genannten KlebstoffstreifenPlattenabschnitts (170), dadurch gekennzeichnet, daß der genannte Kartonzuschnitt eine zweite Lage (136) aus einem Kunststoff aufweist, mit Kantenabschnitten, wobei Teilstücke der genannten Kantenabschnitte mit den genannten linken, rechten, oberen und unteren Kanten (152, 154, 156, 158) zusammenfallen und über zumindest Teilstücken der genannten inneren Oberflächen der genannten ersten und zweiten Bahnen (130, 130) aus einem verhältnismäßig elastischen Material und den Teilstücken der genannten inneren Oberflächen der genannten Mehrzahl von Seitenwandplattenabschnitten (162, 164, 166, 168) und dem genannten Klebstoffstreifen-Plattenabschnitt (170) zwischen den genannten ersten und zweiten Bahnen (130, 130) aus einem verhältnismäßig elastischen Material angeordnet und befestigt sind.

2. Kartonzuschnitt nach Anspruch 1, dadurch gekennzeichnet, daß die zweite Lage (136) im wesentlichen rechteckig ist und einen Oberflächenbereich aufweist, der größer ist als der Oberflächenbereich der genannten ersten Lage (128).

3. Kartonzuschnitt nach Anspruch 1, dadurch gekennzeichnet, daß die zweite Lage (136) eine Bahn aus einem verhältnismäßig elastischen, fluidundurchlässigen Material aufweist.

4. Kartonzuschnitt nach Anspruch 3, dadurch gekennzeichnet, daß die ersten und die zweiten Bahnen (130, 130) aus einem verhältnismäßig elastischen Material nicht an der genannten unitären Bahn (128) aus einem verhältnismäßig steifen Material befestigt sind.

5. Kartonzuschnitt nach einem der Ansprüche 1 bis 4, dadurch gekennzeichnet, daß die genannten ersten und zweiten Bahnen (130, 130) aus einem verhältnismäßig elastischen Material allgemein rechteckig sind.

6. Kartonzuschnitt nach Anspruch 1, dadurch gekennzeichnet, daß die genannte zweite Lage (136) eine gehärtete Beschichtung aus einem Kunststoff aufweist.

7. Kartonzuschnitt nach Anspruch 6, dadurch gekennzeichnet, daß die genannten ersten und zweiten Bahnen (130, 130) aus einem verhältnismäßig elastischen Material nicht an der genannten unitären Bahn (128) aus einem verhältnismäßig steifen Material befestigt sind.

8. Kartonzuschnitt nach Anspruch 4 oder 7, dadurch gekennzeichnet, daß die genannte unitäre Bahn (128) aus einem verhältnismäßig steifen Material aus Pappe bzw. Karton besteht, und wobei die genannten ersten und zweiten Bahnen (130, 130) aus einem verhältnismäßig elastischen Material aus Papier sind.

9. Vorrichtung zur Herstellung von Kartonzuschnitten, wobei die Vorrichtung folgendes umfaßt: ein Walzenpaar (122, 124) mit zueinander ausgerichteten Teilstücken und mit einem vorbestimmten Zwischenabstand zur Bildung eines Spaltes (126) zwischen den Walzen; eine erste Zufuhrvorrichtung für die Zufuhr einer Endlosbahn (128) aus einem verhältnismäßig steifen Material in den genannten Spalt (126); eine zweite Zufuhrvorrichtung für die Zufuhr einer Mehrzahl von Endlosstreifen (130, 130) aus einem verhältnismäßig elastischen Material in zueinander beabstandetem Verhältnis und Teilstücke der genannten Endlosbahn (128) aus einem verhältnismäßig steifen Material überlagernd in den genannten Spalt (126); eine Schneidevorrichtung, die dazu dient, die genannte Endlosbahn (128) aus einem verhältnismäßig steifen Material mit Schnittlinien (174) und Falzlinien (160, 172, 184) und die mit dieser verbundene genannte Mehrzahl von Endlosstreifen (130, 130) aus einem verhältnismäßig elastischen Material in einzelne genannte Kartonzuschnitte (150) zuzuschneiden; und mit einer Schneide- und Falzvorrichtung zur Erzeugung der genannten Schnittlinien (174) und Falzlinien (160, 172, 184) in den genannten Kartonzuschnitten (150); dadurch gekennzeichnet, daß die genannte Vorrichtung eine Beschichtungsvorrichtung zum Auftragen eines Klebstoffüberzugmaterials (132) über freiliegende Oberflächen der genannten Mehrzahl von Endlosstreifen (130) aus einem verhältnismäßig elastischen Material und der genannten Bahn (128) aus einem verhältnismäßig steifen Material aufzutragen, während die Streifen und die Bahn durch den genannten Spalt (126) verlaufen; und mit einer dritten Zufuhrvorrichtung für die Zufuhr einer Endlosfolie (136) aus einem verhältnismäßig elastischen Kunststoff mit entgegengesetzten Oberflächen (138, 140) in den genannten Spalt (126), so daß eine der genannten entgegengesetzten Oberflächen (138) sich im Kontakt mit dem genannten Überzug aus Klebstoff (132) befindet, um die genannte Endlosfolie (136) aus einem verhältnismäßig elastischen Kunststoff an den genannten beschichteten Oberflächen der genannten beabstandeten Endlosstreifen (130, 130) aus einem verhältnismäßig elastischen Material und der genannten überzogenen Oberfläche der genannten Endlosbahn (128) aus einem verhältnismäßig steifen Material anzubringen, wobei die genannte Endlosfolie (136) mit der genannten Endlosbahn (128) und den Endlosstreifen (130, 130) verbunden und gemeinsam mit diesen von der genannten Schneidevorrichtung und der genannten Schneide- und Falzvorrichtung aufgenommen wird.

10. Vorrichtung nach Anspruch 9, dadurch gekennzeichnet, daß es sich bei dem genannten Klebstoffüberzugmaterial (132) um einen Kunststoff handelt.

## Revendications

1. Flan de carton possédant une première couche d'une feuille unitaire (128) d'un matériau relativement rigide ayant une surface interne et une surface externe, la feuille unitaire (128) d'un matériau relativement rigide ayant un bord gauche (152), un bord droit (154), un bord supérieur (156) et un bord inférieur (158), la feuille unitaire (128) d'un matériau relativement rigide ayant plusieurs lignes de coupe (174) et de pliage (160, 172, 184) destinées à diviser la feuille unitaire (128) d'un matériau relativement rigide en plusieurs parties (162, 164, 166, 168) de panneau de paroi latérale, une partie (170) de panneau de patte à coller, des parties (176, 178, 180, 182 ; 188, 190, 192, 194) de panneaux supérieur et inférieur s'étendant vers l'extérieur depuis les parties (162, 164, 166, 168) des panneaux de paroi latérale, chacune des parties (162, 164, 166, 168) de panneau de paroi latérale, la partie (170) de panneau à patte à coller et les parties (176, 178, 180, 182 ; 188, 190, 192, 194) de panneaux supérieur et inférieur ayant une surface interne, une première feuille (130) d'un matériau relativement flexible ayant une surface interne et une surface externe, la surface externe étant superposée à la surface interne des parties (176, 178, 180, 182) du panneau supérieur et des parties (162, 164, 166, 168) de panneau de paroi latérale adjacentes aux lignes de pliage (160, 172) formées entre les parties (162, 164, 166, 168) de panneau de paroi latérale et les parties (176, 178, 180, 182) de panneau supérieur et une partie de la surface interne de la partie (170) de panneau de patte à coller, une seconde feuille (130) d'un matériau relativement flexible ayant une surface interne et une surface externe, la surface externe étant superposée à la surface interne des parties (188, 190, 192, 194) de panneau inférieur et d'autres parties des parties (162, 164, 166, 168) de panneau de paroi latérale adjacentes aux lignes de pliage (160, 184) entre les parties (162, 164, 166, 168) de panneau de paroi latérale, et des parties (188, 190, 192, 194) de panneau inférieur et d'une autre partie de la surface interne de la partie (170) de panneau de patte à coller, caractérisé en ce que le flan de carton comporte une seconde couche (136) de matière plastique ayant des parties de bord, des portions des parties de bord coïncidant avec les bords gauche, droit, supérieur et inférieur (152, 154, 156, 158) et étant superposées et fixées à des parties au moins des surfaces internes de la première et de la seconde feuille (130, 130) de matériau relativement flexible, et des parties des surfaces internes des parties (162, 164, 166, 168) des panneaux de paroi latérale et de la partie (170) de panneau de patte à coller entre la première et la seconde feuille (130, 130) du matériau relativement flexible.

2. Flan de carton selon la revendication 1, caractérisé en ae que la seconde couche (136) est pratiquement rectangulaire et a une surface supérieure à celle de la première couche (128).

3. Flan de carton selon la revendication 1, caractérise en ce que la seconde couche (136) comporte une feuille d'un matériau relativement flexible et imperméable aux fluides.

4. Flan de carton selon la revendication 3, caractérisé en ce que la première et la seconde feuille (130, 130) d'un matériau relativement flexible ne sont pas fixées à la feuille unitaire (128) du matériau relativement rigide.

5. Flan de carton selon l'une quelconque des revendications 1 à 4, caractérisé en ce que la première et la seconde feuille (130, 130) d'un matériau relativement flexible ont une forme générale rectangulaire.

6. Flan de carton selon la revendication 1, caractérisé en ce que la seconde couche (136) comporte un revêtement durci d'une matière plastique.

7. Flan de carton selon la revendication 6, caractérisé en ce que la première et la seconde feuille (130, 130) d'un matériau relativement flexible ne sont pas fixées à la feuille unitaire (128) d'un matériau relativement rigide.

8. Flan de carton selon la revendication 4 ou 7, caractérisé en ce que la feuille unitaire (128) d'un matériau relativement rigide est formée de carton, et la première et la seconde feuille (130, 130) d'un matériau relativement flexible sont formées de papier.

9. Appareil de formation de flans de carton, comprenant une paire de cylindres (122, 124) ayant des portions en regard séparées par une distance prédéterminée pour la formation d'une emprise (126) entre elles, un premier appareil d'alimentation destiné à faire avancer une nappe continue (128) d'un matériau relativement rigide dans l'emprise (126), un second appareil d'alimentation destiné à faire avancer plusieurs bandes continues (130, 130) d'un matériau relativement flexible à distance de parties de la nappe continue (128) de matériau relativement rigide et en superposition avec ces parties, à l'intérieur de l'emprise (126), un appareil de coupe de la nappe continue (128) d'un matériau relativement rigide ayant des lignes de coupe (174) et des lignes de pliage (160, 172, 184), et des bandes continues (130, 130) d'un matériau relativement flexible qui sont fixées aux flans individuels (150) de carton, et un appareil de coupe et de rainurage destiné à former les lignes de coupe (174) et les lignes de pliage (160, 172, 184) dans les flans (150) de carton, caractérisé en ce que l'appareil comprend un appareil d'enduction destiné à appliquer un matériau adhésif de revêtement (132) sur des surfaces exposées des bandes continues (130) d'un matériau relativement flexible et la nappe (128) d'un matériau relativement rigide lors de leur passage dans l'emprise (126), et un troisième appareil d'alimentation destiné à faire avancer un film continu (136) d'une matière plastique relativement flexible ayant des surfaces opposées (138, 140) dans l'emprise (126), de manière que l'une des surfaces opposées (138) soit au contact du revêtement de la matière adhésive (132) et que le film continu (136) d'une matière plastique relativement flexible soit fixé aux surfaces enduites des bandes continues espacées (130, 130) d'un matériau relativement flexible et à la surface enduite de la nappe continue (128) d'un matériau relativement rigide, le film continu (136) étant fixé à la nappe continue (128) et aux bandes continues (130, 130) et ils sont reçus ensemble par l'appareil de coupe et l'appareil de coupe et de rainurage.

10. Appareil selon la revendication 9, caractérisé en ce que la matériau adhésif d'enduction (132) est une matière plastique.
